# EUROPÄISCHE PATENTANMELDUNG

(11) **EP 1 865 675 A1**
(43) Veröffentlichungstag der Anmeldung: **12.12.2007**
(21) Anmeldenummer: 07010743.8
(22) Anmeldetag: 31.05.2007
(51) Int. Cl.: H04L 12/58

(54) **Verfahren und System zur Filterung elektronischer Nachrichten**

(30) Priorität: 08.06.2006 DE 102006026637
(71) Anmelder: Deutsche Telekom AG, 53113 Bonn (DE)
(72) Erfinder: Hühne, Martin, 58095 Hagen (DE); Garbers, Jörn, 53125 Bonn (DE)

(57) **Zusammenfassung**

Verfahren zur Filterung elektronischer Nachrichten (E-Mails), die über ein Datenleitungsnetz, insbesondere über das Internet, vom Endgerät eines Absenders an das Endgerät eines Empfängers versendet werden, wobei der Empfänger durch eine Empfängeradresse identifizierbar ist, wobei an den Empfänger gerichtete E-Mails einen Spamfilter passieren,
wobei der Spamfilter E-Mails herausfiltert, die unmittelbar an die Empfängeradresse gerichtet sind, und dass der Spamfilter E-Mails passieren lässt, die an eine modifizierte Empfängeradresse gerichtet sind und wobei die Modifikation von einer in das Datenleitungsnetz eingeschalteten Kontrollstelle in Form einer auf einem Computer realisierten Funktion legitimiert ist.

## Beschreibung

Die Erfindung betrifft ein Verfahren zur Filterung elektronischer Nachrichten, wie E-Mails, SMS oder ähnliches (nachfolgend zusammenfassend E-Mails), die über ein Datenleitungsnetz, insbesondere über das Internet, vom Endgerät eines Absenders an das Endgerät eines Empfängers, der durch eine Empfängeradresse identifizierbar ist, versendet werden. Die Erfindung betrifft zudem ein System zur Umsetzung des Verfahrens.

Die Anzahl von unerwünscht bei Empfängern eingehenden E-Mails, insbesondere von Werbe-E-Mails (Spam Mails), nimmt kontinuierlich zu. Für den Empfänger ist das wegen eventuell mitgeschickter Viren gefährlich, wobei der Spam selbst ohne Viren lästig ist, da der Empfänger einen erhöhten Zeit- und damit Kostenaufwand für die Sichtung und das Aussortieren der E-Mails aufwenden muss. Um den Empfänger vor der Flut solch unerwünschten Spams zumindest in gewissem Maße zu schützen, wurden statistisch arbeitende Filter entwickelt, die Spam erkennen. Die bekannten Filter nutzen eines von zwei Verfahren, wobei das erste, beispielsweise in der US 6 161 130 beschriebene, Verfahren eine Suche nach festen Mustern, beispielsweise nach typischen Spam-Mail-Kopfzeilen oder nach ungültigen Absenderadressen durchführt.

Nach dem zweiten Verfahren wird eine E-Mail zunächst in Abschnitte unterteilt, wobei diese Abschnitte mit dem Inhalt einer ständig wachsenden Datenbank verglichen werden. Der Vergleich führt nach weiteren Schritten zu der Angabe einer Wahrscheinlichkeit, inwieweit die betreffende E-Mail Spam ist. Dieses Verfahren wird auch als Bayes'sches Verfahren bezeichnet.

Der Nachteil der bekannten Verfahren liegt darin, dass Absender von Spam ihre E-Mails ohne großen Aufwand an jede neue Filtergeneration anpassen können und der Spam ungefiltert zum Empfänger gelangt. Zum anderen besteht bei den bekannten Filtern die Gefahr, dass auch erwünschte E-Mails aussortiert und gelöscht werden. Zudem ist der Empfänger darauf angewiesen, seine Filterversion ständig zu erneuern.

Die Aufgaben der vorliegenden Erfindung liegen nunmehr darin, ein Verfahren und ein System zur effektiven Abwehr von Spam-Mails, kurz Spam, zu schaffen, das die bisher bekannten Verfahren ersetzt und das die Menge des den Empfänger erreichenden Spams drastisch reduziert, wobei das Verfahren für Empfänger insofern komfortabel ist, als ihnen besonderer Verwaltungsaufwand erspart bleibt.

Die Aufgaben werden durch ein Verfahren mit den Merkmalen des Anspruch 1 und ein System mit den Merkmalen des Anspruch 10 gelöst. Vorteilhafte Ausführungsformen der Erfindung sind in den jeweiligen Unteransprüchen genannt.

Die Erfindung liegt darin, im E-Mail Verkehr die Empfängeradresse auf eine bestimmte Weise zu modifizieren und damit dem Spamfilter ein effizientes Filterkriterium zu verschaffen. Der Spamfilter filtert dann diejenigen E-Mails heraus, die, wie der unerwünschte Spam, unmittelbar an die Empfängeradresse gerichtet sind. Hingegen lässt der Spamfilter nur die E-Mails durch, die an die auf legitimierte Weise modifizierte Empfängeradresse gerichtet sind. Die Modifikation wird dabei von einer zentral eingerichteten Kontrollstelle (Mail Trust Center, MTC) legitimiert. Durch die Modifikation wird der E-Mail gewissermaßen eine Signatur aufgeprägt, welche die Filterfunktion abgleichen kann und mit der sich die E-Mail authentifiziert. Eine nicht authentifizierbare E-Mail wird im Filter zurückgehalten. Somit werden die E-Mails, die an die "ursprüngliche" und der Außenwelt bekannte Adresse gerichtet sind, von der Filterfunktion "abgefangen".

Die Legitimation der Modifikation übernimmt die vorteilhafterweise an zentraler Stelle in das Datenleitungsnetz eingebundene Kontrollstelle. Die Modifikation kann verschiedener Art sein. Es kann beispielsweise die komplette Empfängeradresse verändert werden. Eine solche Modifikation ist jedoch verhältnismäßig schwierig handhabbar. Besonders einfach und daher vorteilhaft ist es hingegen, nicht die komplette Empfängeradresse zu verändern, sondern lediglich eine Ergänzung in Form eines "Tokens" zu schaffen, das der ursprünglichen Empfängeradresse angefügt wird. Um Schwierigkeiten mit der Kompatibilität zu vermeiden, muss dieses Token konform zu den bekannten Standards für Mailadressen sein. Eine besondere Ausführungsform der Erfindung liegt somit darin, dass ein in das Datenleitungsnetz eingebundener und als Kontrollstelle wirkender Computer ein Token in Form eines adressfähigen digitalen Identifikators generiert, mit dem die ursprüngliche Empfängeradresse modifiziert werden kann.

Der Filter kann ebenso auf vielfältige Art realisiert sein. Eine wichtige Eigenschaft des Filters ist es jedoch, dass er die legitimierte Modifikation erkennt. Der Filter bzw. die Filterfunktion kann prinzipiell überall innerhalb der Übertragungsstrecke zwischen Absender und Empfänger eingerichtet sein. Sie muss lediglich im Vorfeld der Ausgabe der E-Mail an den Empfänger wirken, so dass dieser keinen Spam angezeigt bekommt. Vorteilhafterweise ist der Filter auf dem Server des Providers, bei dem der Nutzer einen E-Mail Account hat, realisiert. Er kann auch Teil des auf dem Computer des Nutzers laufenden E-Mail Clients sein.

Vorteilhafterweise ist der Filter für einen Empfänger spezifisch, d.h. der Filter lässt nur die an den jeweiligen Empfänger gerichteten E-Mails und nicht jegliche mit legitimierten Token versehene E-Mail durch. Das derart spezifische Anti-Spam-Token kann dann nicht für den Versand an andere Empfänger genutzt werden. Die Gültigkeit der Token kann zeitlich limitiert werden, wobei es darüber hinaus vorteilhaft ist, wenn spezifische Token jederzeit durch den Empfänger gesperrt werden können. Mit der entsprechenden Zusatzfunktionen, die als Sperrliste bei der Kontrollstelle hinterlegbar ist, kann auch eine zentrale Sperrung aller für einen Absenders legitimierter Token durchgeführt werden.

Besonders vorteilhaft ist es, wenn der Absender selber die Möglichkeit erhält, die Modifikation mittels des Tokens durchführen. Ähnlich wie ein Adressat, der Briefmarken für zu versendende Briefe kauft und diese auf die Briefe klebt, muss der Absender von E-Mails sich im Vorfeld solche legitimierenden Token von der Kontrollstelle besorgen. Entsprechend werden nur die mit Token versehenen E-Mails von der Filterfunktion zum Empfänger durchgelassen. Der Einsatz der Token ist insofern vorteilhaft, als die ausgebende Kontrollstelle eine Kontrollfunktion bei der Vergabe einnehmen kann und nicht jedem anfragenden Absender die Token verkauft. So wird der Erwerber vor Erhalt der (Berechtigungs)-Token entsprechend von der Kontrollstelle überprüft.

Für die Umsetzung der Erfindung ist somit die Kontrollstelle als Mittler zwischen dem Empfänger, der vor unliebsamem Spam geschützt werden möchte, und dem Absender, der den -hoffentlich legitimen- Wunsch hat, E-Mails zu versenden, erforderlich. Diese Kontrollstelle verwaltet gewissermaßen die Tokens als Mittel der Zertifizierung. Wenn ein Absender ein zertifiziertes Token hat, kann er E-Mails an Adressaten schicken, die nur mit einem solchen Token versehene E-Mails empfangen wollen. Insofern ist für den reibungslosen Ablauf des E-Mail Verkehrs die Beteiligung an diesem System eine Voraussetzung.

Es kann vorteilhaft sein, wenn die Token einzeln ausgegeben werden und ein Token mit dem Anhängen an eine E-Mail seinen Wert verliert. So wird ein verhältnismäßig großer Schutz vor Missbrauch gewährleistet. Es kann auf der anderen Seite vorteilhaft sein, einem vertrauenswürdigen Absender für eine gewisse Zeit ein kopierbares Token zu überlassen, mit dem er seine E-Mails versehen kann. Die Verwendung dieses "universellen" Tokens kann insofern kontrolliert werden, als Empfänger von unerlaubt mit Token versehenen Spam-Mails sich bei der Kontrollstelle beschweren können, wobei Beschwerden eine Sperrung des Token hervorrufen können. Die Anzahl der vom "universellen" Token hergestellten Kopien kann vermittels der Filterfunktionen ermittelt werden, wobei über dieses Zählen eine Abrechnung gegenüber dem Absender erfolgen kann.

Vorteilhaft am erfindungsgemäßen Verfahren ist, dass nach erfolgter Ausstellung eines Tokens keine weitere zentrale Instanz für die Kommunikation zwischen Absender und Empfänger benötigt wird. Damit ist Funktion des Gesamtsystems nicht von der Verfügbarkeit zentraler Komponenten abhängig. Die Überprüfung der Gültigkeit eines Tokens kann, wie oben ausgeführt, durch die Filterfunktion, die auf Seiten des Empfängers läuft, dezentral erfolgen. Vorteilhaft ist weiterhin, dass keine Änderungen an der bestehenden E-Mail- Infrastruktur erforderlich sind. So muss lediglich für jeden zu schützenden Nutzer ein Filter dezentral hinzugefügt oder ein vorhandener Filter für den Nutzer eingerichtet werden. Das Modell lässt sich auch auf Internet Service Provider anwenden, die solche Filter für ihre Kunden bereitstellen.

Das System kann schrittweise auf- und ausgebaut werden. Neu hinzukommende Nutzer und Nutzergruppen (Instanzen) können in das System eingebunden werden, ohne dass Änderungen bei anderen Nutzern erforderlich sind. Auch neue Absender, die dem System beitreten, erzeugen keinen zusätzlichen Aufwand auf der Empfängerseite. Dennoch ist ein Modell für ein Sponsoring möglich, bei dem eine Instanz, die für eine vertrauenswürdige Kommunikationsbeziehung verwendet werden kann, ein Token gegen Zahlung eines Pauschalbetrages erwirbt. Optional kann auch der bisherige E-Mail-Verkehr weiter empfangen werden. Das System bietet auch die Möglichkeit, dass Absender gegenüber dem Gesamtsystem anonym bleiben. Zudem ist von Vorteil, dass das System günstig realisiert werden kann.

Selbst wenn pro Token lediglich eine geringe Gebühr erhoben wird, entsteht für den Betreiber der Kontrollstelle ein hoher Gesamtumsatz, da pro Absender für jeden geschützten Empfänger ein Token erzeugt werden muss und die Gültigkeit der Tokens begrenzt werden kann. Die Betriebskosten sind relativ gering und nahezu unabhängig von der Anzahl der Teilnehmer.

Noch einmal zusammengefasst besteht die Erfindung also darin, dass zunächst die Empfängeradresse modifiziert wird, wobei die Modifikation an zentraler Stelle von einer unabhängigen Kontrollstelle, beispielsweise dem Mail Trust Center, durch Überprüfung einer vorgebbaren Eigenschaft legitimiert ist. Die Modifikation wird dann durch eine dem Empfänger vorgeschaltete Filterfunktion insbesondere an dezentraler Stelle überprüft. Die Modifikation geschieht vorteilhafterweise durch Anhängen des Tokens, das dem Absender durch die Kontrollstelle zugewiesen wurde. Der Absender wird damit durch die Kontrollstelle zertifiziert, wobei die Zuweisung vorteilhafterweise erfolgt, nachdem eine definierte "Eigenschaft" des Absenders verlässlich geprüft wurde. Das Token kann diese Eigenschaft des Absenders verschlüsselt beinhalten, so dass der Empfänger der E-Mail eine Vorabinformation zu der E-Mail bekommt.

Als "Eigenschaft" kann zum Beispiel das erworbene Recht des Absenders geprüft werden, an bestimmte Empfängeradressen E-Mails senden zu dürfen. Dieses Recht kann, wie oben beschrieben, zeitlich oder benutzerabhängig eingeschränkt und mit gewissen Kosten erworben sein. Die Kosten pro zu versendender E-Mail können verhältnismäßig gering sein, da Absender von Spam-Mails auch von geringen Kosten pro einzelner E-Mail, die ja in ungeheuren Mengen verschickt werden, abschrecken werden. Mit dem Token erhält der Absender die Möglichkeit, mindestens einmal eine modifizierte Empfängeradresse zu verwenden. Weiterhin kann die "Eigenschaft" in der Erfüllung von Kriterien, die vom Empfänger festgelegt wurden, bestehen. Beispielsweise kann der Empfänger eine Liste ihm bekannter Absender hinterlegen, die jederzeit ein Token bekommen sollen.

Das Verfahren kann nach dem folgenden Ablauf durchgeführt werden: Nach der mindestens einmaligen zentralen Überprüfung der mindestens einen vom Empfänger spezifizierten Eigenschaft eines Absenders wird das Ergebnis in der Kontrollstelle in Verbindung mit der Adresse des Absenders gespeichert. Dann wird die Kommunikationsbeziehung zwischen diesem Absender und diesem Empfänger dadurch etabliert, dass dem Absender für diese Empfängeradresse eine modifizierte Empfängeradresse, insbesondere in Form des Tokens, mitgeteilt wird. Der Absender versendet die E-Mail an den Empfänger, indem er in der E-Mail-Adressspezifikation modifizierte Empfängeradresse verwendet.

Die Verwaltung der modifizierten Empfängeradresse kann durch den E-Mail-Client erfolgen. Eingehende E-Mails werden auf Seiten des Empfängers durch die ihm zugeordnete Filterfunktion insofern überprüft. Dabei ist keine Kommunikation mit der Kontrollstelle notwendig. Die Überprüfung erfolgt somit dezentral. Bei erfolgreicher Überprüfung kann die modifizierte Empfängeradresse durch die reguläre Empfängeradresse des Empfängers ersetzt und anschließend die E-Mail an den E-Mail Server des Empfängers weitergeleitet werden. Grundsätzlich können mittels sogenannter White Lists aber auch andere E-Mails durch die Filterfunktion akzeptiert werden.

Nachfolgend wird die Erfindung anhand eines Ausführungsbeispieles näher beschrieben:

Eine erfindungsgemäße Adressmodifikation kann folgendermaßen realisiert werden: Dabei sei "local-part@domain" eine reguläre E-Mail-Adresse, die gemäß den Requests for Comments (RFC 2822) gebildet ist. Die modifizierte E-Mail-Adresse kann das Token "modified" beinhalten und somit durch "modified-localpart "@" domain" gebildet werden. An den local part der regulären E-Mail-Adresse wird kann also ein spezielles Token RFC-konform angehängt werden. Dieses Token ist etwa 32 Zeichen lang und kann mittels einer kryptographischen Funktion, z.B. mit encode(encrypt (*privater_Schlüsse_Empfänger, ID_Absender, Infolist))* gebildet werden, wobei die Variable *"Privater_Schlüssel_Empfänger"* als der private Teil des Schlüsselpaares (*privater_Schlüssel_Empfänger, öffentlicher_Schlüssel_ Empfänger)* definiert ist, das der Empfängerinstanz zugeordnet ist. Es kommen bevorzugt kryptographische Verfahren mit kurzen Schlüssellängen zum Einsatz, z.B. Kryptographie auf Basis elliptischer Kurven. Bei elliptischen Kurven sollte eine Schlüssellänge von 160 Bit ausreichend sicher sein

*Encrypt* ist die kryptographische Funktion. Als Schlüssel wird der erste Parameter verwendet. Ausgabe ist eine Bitfolge. Die Länge hängt vom kryptographischen Verfahren ab. Encode verwandelt eine Bitfolge in eine um den Faktor 5 kürzere Folge aus Buchstaben und Ziffern um, die Bestandteil eines RFC-konformen local parts sein kann.

Die Variable *"ID-Absender"* ist definiert als ein Identifier, der für verschiedene Absender verschiedene Werte annimmt. Es ist auch zulässig, dass für denselben Absender verschiedene Absender-lDs verwendet werden. Hingegen gibt *"Infolist"* zusätzliche Informationen, die der Filter für die weitere Verarbeitung der E-Mail verwenden kann. Dazu zählen beispielsweise die Klassifikation des Absenders in eine bestimmte Trustklasse, das Ablaufdatum des Token oder die Kennzeichnung, inwiefern der Absender gegenüber dem Mail Trust Center anonym ist.

Die modifizierten E-Mail-Adressen werden über das zumeist schon vorhandene Adressbuch des Absenders z.B. mittels Outlook verwaltet. Dabei braucht der Benutzer auf die verwendeten Anti-Spam-Token nicht explizit zugreifen. Der Zugriff erfolgt, indem der Name des gewünschten Empfängers vom Adressbuch automatisch in die modifizierte Empfänger-E-Mail-Adresse übersetzt wird. Dabei sind Änderungen der Client-Software sind nicht erforderlich. Allerdings sollten die modifizierten Empfängeradressen in das Adressbuch aufgenommen werden. Dies kann in gängigen E-Mail-Clients durch vorhandene Funktionen automatisiert erfolgen. Dazu schickt die Filterfunktion auf Anfrage des Absenders oder des Empfängers die modifizierte Empfänger-E-Mail-Adresse per E-Mail an den Absender, der sie mit einem Tastendruck in sein Adressbuch aufnehmen kann.

Im Folgenden werden wesentliche Kernfunktionen einer Filterfunktion dargestellt:

In einer "Whitelist" und der Datenbank des Filters wird zunächst geprüft, ob für die gewünschte Kommunikationsbeziehung zwischen Sender und Empfänger ein Token erforderlich ist. Falls das nicht der Fall ist, wird die E-Mail ohne Modifikation versendet. Die Verbindung ist in diesem Fall entweder explizit in der Whitelist aufgeführt oder es ist nicht bekannt, dass der Empfänger an dem Gesamtsystem teilnimmt.

Falls jedoch ein Token erforderlich ist, wird geprüft, ob in der Datenbank ein gültiges Anti-Spam-Token vorhanden ist. Falls dies nicht der Fall ist, wird ein neues Anti-Spam-Token automatisch von der Kontrollstelle bezogen und in die Datenbank eingepflegt.

Die reguläre E-Mail-Adresse des Empfängers wird durch die modifizierte Adresse ersetzt, bevor die E-Mail versendet wird. Eventuell werden Datenbankparameter aktualisiert.

Mails mit mehreren Empfängern können in mehrere E-Mails aufgeteilt und einzeln wie folgt behandelt werden: Zunächst wird geprüft, ob der Absender der E-Mail in der Whitelist der Datenbank aufgeführt ist. Wenn das der Fall ist, wird die E-Mail weitergeleitet. Ansonsten wird geprüft, ob ein Anti-Spam-Token vorhanden ist. Falls nicht, wird eine Standard-Ablehnungs-E-Mail mit Informationen, warum die E-Mail abgelehnt wurde und was der Absender unternehmen muss, um den Empfänger zu erreichen, generiert. Die E-Mail wird in diesem Fall nicht an den E-Mail-Server des Empfängers weitergeleitet.

Das Anti-Spam-Token wird anschließend dekodiert und entschlüsselt. Sämtliche Informationen werden extrahiert. Aufgrund dieser Informationen wird vom Anti-Spam-Proxy automatisch entschieden, ob die E-Mail dem E-Mail-Server des Empfängers zugestellt wird. In diesem Fall wird die modifizierte Empfangsadresse durch die reguläre Empfangsadresse ersetzt und die Kommunikationsbeziehung (Absender, Anti-Spam-Token, ggf. Parameter, Empfänger) wird in der Datenbank abgelegt bzw. aktualisiert. CC-Empfänger werden gesondert behandelt. Im Falle der Ablehnung wird eine Fehler-E-Mail an den Absender gesendet.

## Patentansprüche

1. Verfahren zur Filterung elektronischer Nachrichten (E-Mails), die über ein Datenleitungsnetz, insbesondere über das Internet, vom Endgerät eines Absenders an das Endgerät eines Empfängers versendet werden, wobei der Empfänger durch eine Empfängeradresse identifizierbar ist, wobei an den Empfänger gerichtete E-Mails einen Spamfilter passieren,
**dadurch gekennzeichnet,**
**dass** der Spamfilter E-Mails herausfiltert, die unmittelbar an die Empfängeradresse gerichtet sind, und dass der Spamfilter E-Mails passieren lässt, die an eine modifizierte Empfängeradresse gerichtet sind, wobei die Modifikation von einer in das Datenleitungsnetz eingeschalteten Kontrollstelle in Form einer auf einem Computer realisierten Funktion legitimiert ist.

2. Verfahren nach Anspruch 1,
**dadurch gekennzeichnet,**
**dass** die Kontrollstelle ein individuelles Berechtigungstoken in Form eines digitalen Identifikators generiert, wobei die Empfängeradresse durch Anfügung des Berechtigungstokens modifiziert wird.

3. Verfahren nach Anspruch 2,
**dadurch gekennzeichnet,**
**dass** das Berechtigungstoken dem Absender zum Modifikation der Empfängeradresse zur Verfügung gestellt wird.

4. Verfahren nach Anspruch 1,
**dadurch gekennzeichnet,**
**dass** die Kontrollstelle den Absender vor der Zurverfügungstellung eines Berechtigungstokens anhand vorgegebener Charakteristika überprüft.

5. Verfahren nach einem der vorherigen Ansprüche,
**dadurch gekennzeichnet,**
**dass** die modifizierte Empfängeradresse mindestens eine einem Absender zugeordnete Eigenschaft enthält.

6. Verfahren nach Anspruch 5,
**dadurch gekennzeichnet,**
**dass** die Eigenschaft in der Berechtigung besteht, mindestens eine E-Mail an den Empfänger zu senden.

7. Verfahren nach Anspruch 5,
**dadurch gekennzeichnet,**
**dass** die Eigenschaft in vom Empfänger festlegbaren Kriterien, insbesondere der Bekanntheit des Empfängers mit dem Absender, besteht.

8. Verfahren nach Anspruch 5,
**dadurch gekennzeichnet,**
**dass** die Eigenschaft in einer Authentisierung des Absenders durch ein Zuweisungs-Computersystem besteht.

9. Verfahren nach einem der vorherigen Ansprüche,
**dadurch gekennzeichnet,**
**dass** die modifizierte Empfängeradresse von einem in einer Speichereinheit gespeicherten E-Mailprogramm des Computersystems des Empfängers oder von einem Proxy-Server, insbesondere einem Anti-Spam-Proxy-Server, des Computersystems des Empfängers verwaltet wird, wobei die Verwaltung insbesondere die Prüfung der der modifizierten Empfängeradresse zugeordneten Eigenschaft umfasst.

10. Verfahren nach einem der vorherigen Ansprüche,
**dadurch gekennzeichnet,**
**dass** bei positiv geprüfter modifizierter Empfängeradresse, diese von der Empfängeradresse ersetzt und die elektronische Mail unter der Empfängeradresse weitergeleitet wird.
